Europäisches Patentamt

European Patent Office

Office européen des brevets

(19)

(11) EP 0 404 238 B1

(12) **FASCICULE DE BREVET EUROPEEN**

(45) Date de publication et mention
de la délivrance du brevet:
**17.04.1996 Bulletin 1996/16**

(51) Int Cl.[6]: **H04N 7/00**, H04N 9/79

(21) Numéro de dépôt: **90201554.4**

(22) Date de dépôt: **15.06.1990**

(54) **Dispositifs de traitement de signaux avant et aprés transmission et/ou stockage avec réduction de débit, et systèmes de transmission et/ou de stockage de signaux incluant de tels dispositifs**

Signalverarbeitungseinrichtungen vor und nach Übertragung und/oder Speicherung mit Datenflussverminderung, und Verfahren zur Übertragung und/oder Speicherung von Signalen mit solchen Einrichtungen

Devices for signal processing before and after transmission and/or storage with data rate reduction, and systems for transmitting and/or storing signals including such devices

(84) Etats contractants désignés:
**AT BE DE DK ES FR GB IT NL SE**

(30) Priorité: **20.06.1989 FR 8908186**
**20.06.1989 FR 8908187**

(43) Date de publication de la demande:
**27.12.1990 Bulletin 1990/52**

(73) Titulaires:
• **LABORATOIRES D'ELECTRONIQUE PHILIPS S.A.S.**
**F-94450 Limeil-Brévannes (FR)**
Etats contractants désignés:
**FR**
• **Philips Electronics N.V.**
**NL-5621 BA Eindhoven (NL)**
Etats contractants désignés:
**BE DE DK ES GB IT NL SE AT**

(72) Inventeurs:
• **Haghiri, Mohammad-Rèza,**
**Société Civile S.P.I.D.**
**F-75008 Paris (FR)**
• **Denoyelle, Pascal, Société Civile S.P.I.D.**
**F-75008 Paris (FR)**
• **Fautier, Thierry, Société Civile S.P.I.D.**
**F-75008 Paris (FR)**

(74) Mandataire: **Landousy, Christian et al**
**Société Civile S.P.I.D.**
**156, Boulevard Haussmann**
**F-75008 Paris (FR)**

(56) Documents cités:
EP-A- 0 146 713          EP-A- 0 175 860
EP-A- 0 252 563          WO-A-87/05770

• COLLOQUE HDTV 1987, Ottawa, 4-8 octobre 1987, vol. 1, pages 6.2.2-6.2.28; P. BERNARD et al.: "Analyse de structures de sous-echantillonnage spatio-temporel d'un signal TVHD en vue de sa transmission dans un canal MAC"
• ELECTRONICS & WIRELESS WORLD, vol. 94, no. 1631, septembre 1988, pages 845-850, Sutton, Surrey, GB; T. IVALL: "Eureka 95 - a world standard?"
• IEEE SPECTRUM, vol. 25, no. 1, janvier 1988, pages 56-58, IEEE, New York, US; R.K. JURGEN: "Consumer electronics"
• SYMPOSIUM RECORD BROADCAST SESSIONS, 16TH INTERNATIONAL TV SYMPOSIUM, Montreux, 17-22 juin 1989, pages 37-52; F.W.P. VREESWIJK et al.: "HDMAC coding for compatible broadcasting of high definition television signals"

**Description**

La présente invention concerne un dispositif de traitement de signaux regroupés par lots périodiques, tels que des images, et destinés à être, par blocs, transmis et/ou stockés par l'intermédiaire d'un support à bande passante limitée impliquant une réduction de la quantité d'informations à transmettre et/ou stocker, comprenant :

(a) un sous-ensemble de sous-échantillonnage temporel, prévu pour délivrer, selon un premier mode, dit compensé, de transmission et/ou de stockage une première séquence de signaux à transmettre et/ou stocker de fréquence deux fois plus faible que celle des lots de signaux d'origine ;

(b) un sous-ensemble d'estimation du mouvement entre blocs appartenant à des lots périodiques successifs, prévu pour délivrer, par bloc, une information de mouvement à transmettre et/ou stocker en remplacement de ceux des blocs éliminés par ledit sous-échantillonnage temporel ;

(c) un sous-ensemble de reconstitution avec compensation de mouvement.

L'invention concerne aussi un système de transmission et/ou de stockage de signaux comprenant un étage d'émission et, après transmission et/ou stockage des signaux émis sur un support à bande passante limitée impliquant un traitement de réduction de la quantité d'informations à transmettre et/ou stocker, un étage de réception et/ou de lecture des signaux transmis et/ou stockés, et dans lequel ledit étage d'émission incorpore un tel dispositif de traitement.

L'invention concerne également un dispositif de traitement de signaux préalablement transmis et/ou stockés après une réduction de la quantité d'informations à transmettre et/ou stocker, opérée soit selon un premier mode dit compensé et à l'aide d'un sous-ensemble de sous-échantillonnage temporel prévu pour délivrer une première séquence de signaux, soit selon un deuxième mode dit de repli et à l'aide d'un sous-ensemble de traitement de repli prévu pour adjoindre à ladite première séquence une deuxième séquence de signaux synchrone de la première, le choix dudit mode étant opéré avec émission d'une information de mode et à l'aide d'un sous-ensemble de prise de décision et sur la base d'informations de mouvement, également transmises et/ou stockées, et d'une comparaison d'informations liées respectivement à l'un ou l'autre mode.

L'invention concerne encore un dispositif de traitement de signaux préalablement transmis et/ou stockés après une réduction de la quantité d'informations à transmettre et/ou stocker, opérée soit selon un premier mode dit compensé et à l'aide d'un sous-ensemble de sous-échantillonnage temporel prévu pour délivrer une première séquence de signaux, soit selon un deuxième mode dit de repli et à l'aide d'un sous-ensemble de traitement de repli prévu pour adjoindre à ladite première séquence une deuxième séquence de signaux synchrone de la première, avec sous-échantillonnage spatial desdites séquences, et opérer la sélection alternative de l'une ou l'autre de ces séquences spatialement sous-échantillonnées, le choix dudit mode étant opéré avec émission d'une information de mode et à l'aide d'un sous-ensemble de prise de décision et sur la base d'informations de mouvement, également transmises et/ou stockées, et d'une comparaison d'informations liées respectivement à l'un ou l'autre mode, en vue de la sélection soit de la sortie dudit sous-ensemble de compensation de mouvement soit de la sortie dudit sous-ensemble de traitement de repli.

L'invention concerne enfin un système de transmission et/ou de stockage de signaux comprenant un étage d'émission et, après transmission et/ou stockage des signaux émis sur un support à bande passante limitée impliquant un traitement de réduction de la quantité d'informations à transmettre et/ou à stocker, un étage de réception et/ou de lecture des signaux transmis et/ou stockés.

Cette invention trouve une application particulièrement intéressante dans le cas où les signaux à traiter incluent des informations représentatives d'images animées et où un disque compact est utilisé comme support des signaux transmis et/ou stockés.

La transmission et/ou le stockage d'une très grande quantité d'informations, associée par exemple à des images, implique(nt) en général d'opérer une compression des signaux à transmettre et/ou stocker, c'est-à-dire une réduction, dans un rapport à déterminer, de leur nombre. Le rapport de réduction est déterminé entre autres par le fait qu'on doit conserver une quantité suffisante de signaux pour ne pas trop dégrader l'information globale qu'ils portent, par exemple par le fait qu'on doit conserver une qualité d'image acceptable, dans le cadre de l'application citée.

La plupart des procédés de codage de signaux connus actuellement pour réaliser cette réduction de débit reposent sur des transformations orthogonales du type transformation en cosinus discret, qui autorisent une réduction de débit dans un rapport de l'ordre de 10 à 1. Pour un bon nombre d'applications, et par exemple dans l'application au stockage et traitement d'images sur disque compact, ce rapport n'est pas suffisant, et un traitement de réduction complémentaire dans un rapport de 2 à 1 s'avère indispensable.

Un but de l'invention est donc de proposer un dispositif de traitement de signaux qui remédie aux insuffisances précédemment constatées en matière de réduction de débit.

A cet effet l'invention concerne un dispositif de traitement de signaux tel que défini dans le préambule et caractérisé en ce qu'il comprend également :

(d) un sous-ensemble de traitement de repli prévu pour ajoindre par bloc à ladite première séquence au moins une deuxième séquence de signaux sychrone de la première et délivrée selon un deuxième mode dit de repli se substituant audit premier mode compensé en fonction du résultat, fourni par un sous-ensemble de prise de décision, d'une comparaison entre les signaux d'origine et les signaux restitués par ledit sous-ensemble de reconstitution avec compensation de mouvement à partir des blocs transmis et/ou stockés et des informations de mouvement.

Dans cette structure, le sous-ensemble de prise de décision comprend par exemple un interrupteur commandé par un circuit de décision pour ne sélectionner, en mode compensé, que les signaux de sortie du sous-ensemble de sous-échantillonnage temporel et, en mode de repli, également les signaux de sortie du sous-ensemble de traitement de repli.

La communication "HDMAC coding for compatible broadcasting of high definition television signals" présentée par F.W.P. Vreeswijk et al. lors du "16th International TV Symposium", Montreux (Suisse), 17-22 juin 1989, pp.37-52, décrit un dispositif de traitement de signaux d'images par bloc destinés à être transmis et/ou stockés après compression de données, comprenant notamment trois voies de sous-échantillonnage dites 20 ms, 40 ms, et 80 ms dont une seule voit sa sortie sélectionnée pour transmission. Cette transmission de la sortie de la voie 20 ms ou de la sortie de la voie 40 ms ou de la sortie de la voie 80 ms résulte effectivement d'une prise de décision en fonction du résultat d'une comparaison entre les signaux d'origine et des signaux reconstitués après une estimation et une compensation de mouvement, mais est effectuée selon un rythme propre à chaque voie et qui correspond à une structure respective de sous-échantillonnage adaptée aux vitesses de déplacement constatées sur les images (voie 80 ms : images immobiles ou à très faible mouvement ; voie 40 ms : images à mouvement modéré ; voie 20 ms : images avec mouvements rapides). Si l'on peut accepter d'appeler "mode compensé" le mode de fonctionnement de ce système lorsque c'est la sortie de la voie 40 ms (et elle seule) qui est sélectionnée (puisque, dans ce cas, les signaux transmis sont accompagnés d'informations de mouvement permettant ultérieurement la reconstruction de ceux des signaux qui ne sont pas transmis), on ne peut par contre, en aucun cas, appeler "mode de repli" les modes de fonctionnement dans lesquels c'est la sortie de la voie 20 ms ou celle de la voie 80 ms qui est sélectionnée, au lieu de la sortie de la voie 40 ms. En effet, la sélection de l'une des trois voies est un choix de l'un parmi trois modes de fonctionnement comparables et la transmission de l'une des sorties est exclusive de celles des deux autres. Dans le cas présent, le dispositif ne comprend que deux voies de sous-échantillonnage, mais dont, selon les circonstances, une seule ou les deux voient leur sortie sélectionnée. Cette sélection d'une ou des deux sorties de ces voies résulte d'une prise de décision conduisant à ce que le fonctionnement du dispositif se déroule selon un mode dit compensé, dans lequel seule une première séquence de signaux (de fréquence deux fois plus faible que celle des signaux d'origine avant le sous-échantillonnage temporel) est transmise et/ou stockée, ou bien selon un mode dit de repli dans lequel ladite première séquence de signaux est toujours présente et complétée par une deuxième séquence synchrone de la première.

Dans un mode de réalisation avantageux, le sous-ensemble de traitement de repli comprend un circuit de retard égal à la période des signaux d'origine, suivi d'un circuit de sous-échantillonnage temporel dans le même rapport que celui du sous-ensemble de sous-échantillonnage temporel.

Dans un autre mode de réalisation plus perfectionné, le sous-ensemble de traitement de repli comprend également un sous-ensemble de sous-échantillonnage spatial comprenant lui-même, en parallèle, une première voie et une deuxième voie de sous-échantillonnage spatial dans le même rapport que celui de sous-échantillonnage temporel, la maille de sous-échantillonnage spatial de chaque voie étant indépendante du mouvement et fixe à la résolution temporelle des signaux près.

Dans cette dernière structure, le dispositif est de préférence remarquable en ce que :

(A) le sous-ensemble de sous-échantillonnage spatial comprend, dans chaque voie, un circuit de filtrage spatial suivi d'un circuit de sous-échantillonnage spatial dans un rapport 1/2, et, en sortie des deux voies, un aiguilleur prévu pour sélectionner, à une fréquence deux fois plus faible que celle des signaux d'origine, alternativement l'une ou l'autre des sorties desdits circuits de sous-échantillonnage spatial ;
(B) le sous-ensemble de prise de décision comprend un commutateur commandé pour sélectionner, en mode compensé, les signaux de sortie du sous-ensemble de sous-échantillonnage temporel ou, en mode de repli, les signaux de sortie dudit aiguilleur.

Dans une autre réalisation du sous-ensemble de traitement de repli, le dispositif est également remarquable en ce que :

(A) le sous-ensemble de traitement de repli comprend, en parallèle sur ledit sous-ensemble de sous-échantillonnage temporel, un sous-ensemble de sous-échantillonnage spatial comprenant lui-même deux voies en parallèle dont la première comprend un premier circuit de sous-échantillonnage spatial et dont la seconde comprend en série un circuit à retard d'une période des signaux d'origine et un second circuit de sous-échantillonnage spatial, la maille de sous-échantillonnage spatial de chaque voie étant indépendante du mouvement et fixe à la résolution temporelle des signaux près, et lesdites deux voies en parallèle étant précédées, en série, d'un circuit de filtrage spatial et suivies d'un aiguilleur prévu pour sélectionner, à une fréquence deux fois plus faible que celle des signaux d'origine, alternativement l'une ou l'autre des sorties des circuits de sous-échantillonnage spatial ;

(B) le sous-ensemble de prise de décision comprend un commutateur commandé par un circuit de décision pour sélectionner, en mode compensé, les signaux de sortie du sous-ensemble de sous-échantillonnage temporel et, en mode de repli, les signaux de sortie dudit aiguilleur.

Dans l'application particulière où les signaux à transmettre et/ou stocker sont représentatifs d'images, le dispositif de traitement de signaux est alors caractérisé en ce que la sélection effectuée dans le sous-ensemble de prise de décision est opérée par bloc d'image et après des calculs d'erreur d'interpolation et d'erreur de repli comparées pour sélectionner la plus faible.

Dans le cas de cette application à des signaux d'image, l'invention est utilisable de manière particulièrement avantageuse lorsque le support de signaux transmis et/ou stockés est du type disque compact.

Un autre but de l'invention est de propose un dispositif de traitement de signaux préalablement transmis et/ou stockés adapté, à la réception, à une restitution de signaux sans perte des informations relatives au mouvement contenu dans les signaux d'origine.

L'invention concerne à cet effet, dans un premier mode de réalisation, un dispositif caractérisé en ce qu'il comprend :

(a) un sous-ensemble de compensation de mouvement, prévu pour recevoir les signaux transmis et/ou stockés correspondant aux signaux de sortie dudit sous-ensemble de sous-échantillonnage temporel ;

(b) un commutateur recevant sur une première entrée la sortie du sous-ensemble de compensation de mouvement et sur une deuxième entrée les signaux transmis et/ou stockés correspondant aux signaux de sortie dudit sous-ensemble de traitement de repli et délivrant sur sa sortie, respectivement selon ladite information de mode correspondant à la sélection du premier ou du deuxième mode de fonctionnement, soit les signaux présents sur ladite première entrée, soit les signaux présents sur ladite deuxième entrée ;

(c) un commutateur de sélection alternée, à une fréquence double de celle des signaux d'entrée, soit de ladite sortie de ce commutateur, soit de l'entrée dudit sous-ensemble de compensation de mouvement mais retardée d'une demi-période de la cadence desdits signaux d'entrée du dispositif de traitement de signaux.

L'invention concerne également, dans une variante constituant un deuxième mode de réalisation, un dispositif caractérisé en ce qu'il comprend :

a) un premier sous-ensemble de sous-échantillonnage et d'interpolation des signaux reçus correspondant aux signaux préalablement transmis et/ou stockés et constituant les signaux d'entrée du dispositif ;

b) un sous-ensemble de compensation de mouvement, dont l'entrée est reliée, respectivement selon ladite sélection du premier ou du deuxième mode de fonctionnement, soit directement à l'entrée dudit dispositif, soit à cette même entrée mais par l'intermédiaire dudit premier sous-ensemble de sous-échantillonnage et d'interpolation ;

c) un deuxième sous-ensemble de sous-échantillonnage et d'interpolation dont l'entrée est reliée, respectivement selon ladite sélection du premier ou du deuxième mode de fonctionnement, soit à la sortie dudit sous-ensemble de compensation de mouvement, soit directement à l'entrée dudit dispositif ;

d) un commutateur, délivrant sur sa sortie, respectivement selon ladite information de mode correspondant à la sélection du premier ou du deuxième mode de fonctionnement, soit la sortie dudit sous-ensemble de compensation de mouvement, soit la sortie dudit deuxième sous-ensemble de sous-échantillonnage et d'interpolation ;

(e) un commutateur de sélection alternée, à une fréquence double de celle des signaux d'entrée, soit de ladite sortie de ce commutateur, soit de l'entrée dudit sous-ensemble de compensation de mouvement mais retardée d'une demi-période de la cadence desdits signaux d'entrée du dispositif.

Dans le cas de ce deuxième mode de réalisation, le dispositif est de préférence caractérisé en ce que les premier et deuxième sous-ensembles de sous-échantillonnage et d'interpolation comprennent chacun un circuit de sous-échantillonnage spatial et un circuit d'interpolation spatiale, et en ce que le sous-ensemble de compensation de mouvement comprend des mémoires d'image et un additionneur, en vue d'une interpolation compensée en mouvement à partir de l'image de sortie de la première de ces mémoires, de l'image d'entrée de la deuxième de ces mémoires, et de l'information de mouvement entre lesdites images d'entrée et de sortie, le retard apporté par chacune desdites mémoires étant égal à la moitié de la période des signaux d'entrée du dispositif de traitement.

Dans l'une ou l'autre de ces structures, le dispositif est avantageusement caractérisé en ce que la sélection à l'entrée du sous-ensemble de compensation de mouvement et celle à l'entrée du deuxième sous-ensemble de sous-échantillonnage et d'interpolation sont opérées respectivement à l'aide d'un premier et d'un deuxième commutateur commandés par ladite information de mode.

Les particularités et avantages de l'invention apparaîtront maintenant de façon plus détaillée dans la description qui suit et dans les dessins annexés, donnés à titre d'exemples non limitatifs et dans lesquels :

- la figure 1 montre un premier exemple, conforme à l'invention, de réalisation de dispositif de traitement de signaux destinés à être transmis et/ou stockés après réduction de leur débit ;
- la figure 2 montre, dans ce dispositif, un exemple de réalisation du sous-ensemble de reconstitution avec compensation de mouvement et du circuit de décision du sous-ensemble de prise de décision ;
- la figure 3 montre, en combinaison avec la figure 1, un autre mode de réalisation du sous-ensemble de traitement de repli ;
- les figures 4a à 4c montrent trois exemples de gabarits des circuits de filtrage de la structure de la figure 3, adaptés respectivement à différentes mailles de sous-échantillonnage telles que représentées sur les figures 5a à 5c ;
- la figure 6 montre un autre exemple de réalisation du dispositif de traitement de signaux ;
- la figure 7 est un exemple, conforme à l'invention, de dispositif de traitement de signaux préalablement transmis et/ou stockés après traitement dans un dispositif du type de celui correspondant aux figures 1 et 3 associées, et représenté sur les figures 7a, 7b, 7c dans trois situations de fonctionnement différentes.

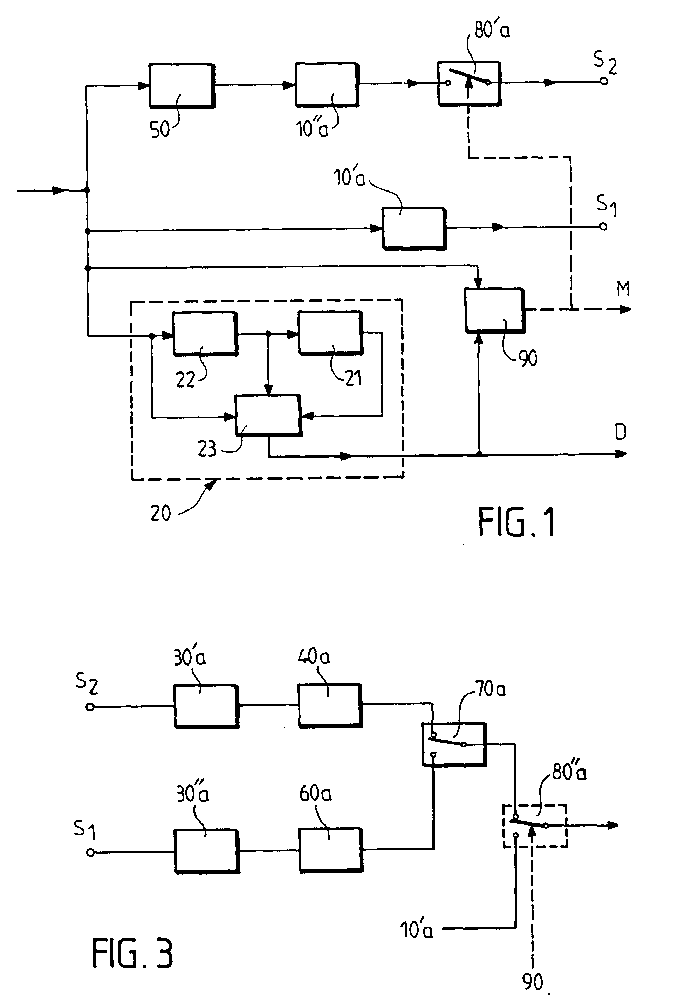

Dans l'application ici décrite, les signaux d'entrée ont par exemple une fréquence de répétition de 25 Hz et le dispositif de traitement de ces signaux doit alors délivrer des signaux à la fréquence de 12,5 Hz. Ce sous-échantillonnage temporel d'un facteur 2 est réalisé de la façon suivante, décrite en liaison avec les figures 1 et 3 principalement.

Le dispositif de traitement de signaux représenté sur la figure 1 comprend tout d'abord un sous-ensemble de sous-échantillonnage temporel (en anglais, "temporal sub-sampling sub-assembly"), prévu pour délivrer, selon un premier mode -dit compensé- de transmission et/ou de stockage, une première séquence de signaux (à transmettre et/ou stocker) de fréquence plus faible que celle des signaux d'origine dans un rapport déterminé. Ce sous-ensemble consiste ici en un circuit 10'a de sous-échantillonnage temporel dans un rapport moitié. Le dispositif comprend d'autre part un sous-ensemble d'estimation de mouvement (en anglais, "motion estimation sub-assembly"), consistant ici en un circuit d'estimation de mouvement 20. Le circuit 10'a de sous-échantillonnage temporel est, dans le cas présent, un commutateur commandé à la moitié de la fréquence de répétition d'origine, c'est-à-dire ici à 12,5 Hz, et qui élimine donc une image de signaux sur deux dans la suite des signaux d'images, par exemple les images paires. Le circuit d'estimation de mouvement 20 agit, lui, sur les images non éliminées, ici les images impaires. On considère, dans l'exemple décrit, que les informations d'image sont traitées par blocs de 16 x 16 signaux d'image. Pour chacun de ces blocs, le circuit 20 recherche la direction du mouvement afin de déduire ultérieurement une approximation de ce bloc à partir d'une part de l'information de mouvement ainsi obtenue, appelée D, et d'autre part du contenu des deux images adjacentes à l'image éliminée. Les informations de mouvement sont également à transmettre et/ou stocker, en remplacement de ceux des blocs qui sont éliminés par le sous-échantillonnage temporel. Sur la figure 1 est représenté un exemple de circuit d'estimation de mouvement comprenant deux mémoires d'image 21 et 22 et un corrélateur par blocs 23.

On connaît déjà de tels corrélateurs, par exemple de l'article de J.R. Jain et A.K. Jain, "Displacement measurement and its application in interframe image coding", IEEE Transactions on Communications, vol.COM-29, n°12, déc.1981, pp. 1799 à 1808. L'estimation de mouvement par corrélation ainsi proposée a pour effet de déterminer pour chaque bloc de l'image éliminée, $I_2$ par exemple, dans une suite d'images $I_1$, $I_2$, $I_3$, etc...) un vecteur de déplacement D tel que l'on puisse déduire de cette connaissance de D une approximation $\hat{I}_2$ de l'image éliminée à partir de la demi-somme des images non éliminées $I_1$ et $I_3$ qui l'entourent, selon une relation du type :

$$\hat{I}_2(X) = (1/2)(I_1(X-D) + I_3(X+D))$$

où X est l'indice spatial du point d'image courant, $I_1$, $I_2$, $I_3$, les images d'origine, D le déplacement (en points d'image), et $\hat{I}_2$ l'approximation recherchée de l'intensité du point X du bloc courant de l'image éliminée.

Exprimée en d'autres termes, cette estimation de mouvement revient à rechercher pour chaque bloc, représenté par un point courant X, un vecteur D tel que l'expression :

$\Sigma$ $(DFD(X,D))^2$ pour la totalité des blocs soit minimale. Dans ladite expression, DFD, qui provient des termes anglais correspondants, "Display Frame Difference", est l'erreur d'approximation attachée au bloc courant et équivalente, pour ce bloc, à la somme des carrés des erreurs d'approximation sur tous les points du bloc. Cette erreur d'approximation a donc pour expression :

$$\sum_{(blocs)} (I_2(X) - (1/2)(I_3(X+D) + I_1(X-D))^2,$$

et c'est cette expression dont la valeur minimale est recherchée. Le vecteur de déplacement sélectionné est celui qui est associé à cette valeur minimale, après un test exhaustif de tous les vecteurs de déplacement possibles dans une plage de recherche délimitée par des valeurs horizontale et verticale $D_x$ et $D_y$ respectivement.

Le dispositif de traitement de signaux comprend également un sous-ensemble de traitement de repli (en anglais, "fall-back processing sub-assembly"), qui est destiné à prendre le relais du fonctionnement en mode compensé lorsque le sous-ensemble d'estimation de mouvement est défaillant selon un critère prédéterminé précisé plus loin. D'une façon générale, le mode de fonctionnement normal est celui de l'estimation de mouvement, qui va permettre une compensation de mouvement ultérieure et qu'on appellera de ce fait mode compensé ("compensated mode"), et ce mode normal peut être remplacé dans certaines situations par un mode appelé mode de repli ("fall-back mode"). Ce sous-ensemble de traitement de repli comprend un circuit de retard 50, ledit retard étant ici égal à la période des signaux d'origine, et un circuit $10''a$ de sous-échantillonnage temporel dans le même rapport que celui du circuit $10'a$.

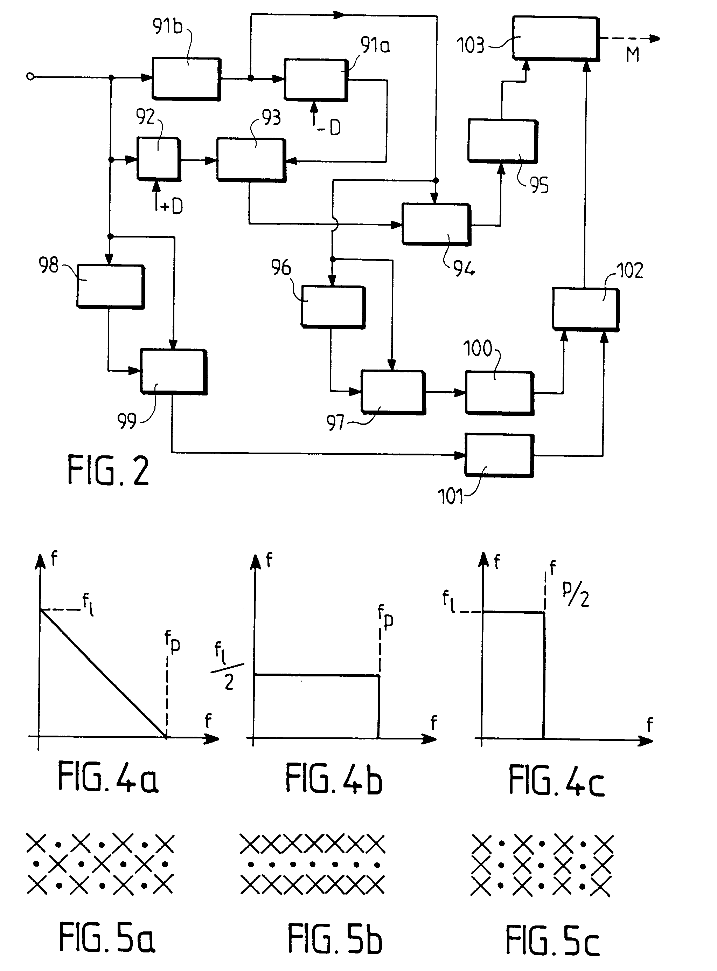

Le dispositif de traitement de signaux comprend également un sous-ensemble de reconstitution avec compensation de mouvement prévu pour délivrer, à partir d'une part de ceux des blocs qui, dans les signaux d'origine, donnent lieu à la transmission et/ou le stockage selon le mode compensé et d'autre part des informations de mouvement associé auxdits blocs en remplacement des blocs éliminés, les blocs de signaux tels qu'ils seront, à la réception, reconstruits, en remplacement des blocs non transmis, à partir des séquences de signaux transmises et des informations de mouvement transmises. Ce sous-ensemble comprend ici, comme indiqué sur la figure 2, d'une part des mémoires d'image 91a, 91b et 92, et d'autre part un additionneur 93. Ces éléments permettent d'effectuer une interpolation compensée en mouvement, par une demi-somme de l'image $I_1$ (présente sur la sortie de la mémoire 91a en tenant compte du vecteur de déplacement D sélectionné par le circuit d'estimation de mouvement 20) et de l'image $I_3$ (présente sur la sortie de la mémoire 92 en tenant compte également de D), les adresses dans ces mémoires 91 et 92 étant décalées, de -D dans la mémoire 91a et de +D dans la mémoire 92. L'image compensée en mouvement résultant de cette interpolation est délivrée par l'additionneur 93.

Le dispositif de traitement de signaux comprend enfin un sous-ensemble de prise de décision, comprenant lui-même, ici, un commutateur $80'a$ commandé par un circuit de décision. Dans l'exemple ici décrit (voir la figure 2), le circuit de décision (94 à 103) est plus précisément constitué de la façon suivante. Un soustracteur 94, retranchant l'image $I_2$, présente en sortie de la mémoire 91b, de l'image compensée en mouvement présente en sortie du sous-ensemble de reconstitution avec compensation de mouvement (c'est-à-dire en sortie de l'additionneur 93), et un élévateur au carré 95 de la sortie de ce soustracteur 94 constituent ensemble un circuit (94,95) dit de calcul d'erreur d'interpolation en mode de compensation de mouvement. Cette erreur d'interpolation est calculée par bloc. Un circuit (96, 97, 98, 99, 100, 101, 102, 103) permet de même un calcul d'erreur en mode de repli, et comprend, à cet effet, des circuits de filtrage spatial (96,97) et (98,99) de l'image $I_3$, comprenant l'un et l'autre un filtre spatial 96 ou 98 et un soustracteur 97 ou 99, puis des élévateurs au carré 100 et 101 des signaux de sortie desdits circuits de filtrage spatial, un additionneur 102 délivrant la demi-somme des signaux de sortie de ces élévateurs au carré 100 et 101, et un comparateur 103 des signaux de sortie de l'élévateur au carré 95 et de l'additionneur 102. Ce comparateur 103 sélectionne celle des sorties qui est la plus faible et délivre pour chaque bloc d'image une information de mode correspondante : mode compensé en cas de sélection de la sortie de l'élévateur au carré 95, mode de repli dans le cas contraire.

Le fonctionnement du dispositif de la figure 1 est le suivant. Selon le premier mode de transmission (mode compensé), le sous-ensemble de sous-échantillonnage temporel -ici le circuit 10'a- délivre une première séquence de signaux. Le rapport de sous-échantillonnage temporel étant égal à 1/2 dans l'exemple décrit, la fréquence de ces signaux est, on l'a vu, égale à 12,5 Hz. Selon le deuxième mode de transmission (mode de repli), une deuxième séquence de signaux synchrone de la première est également transmise, à savoir les signaux de sortie du circuit 10"a de sous-échantillonnage temporel. Ainsi, les signaux normalement transmis sont les blocs disponibles sur la sortie $S_1$, et leur sont adjoints, en mode de repli (lorsque le circuit de décision 90 commande la fermeture de l'interrupteur 80'a), les blocs de repli présents sur la sortie $S_2$.

Dans une variante de réalisation, le sous-ensemble de traitement de repli comprend également un sous-ensemble de sous-échantillonnage spatial. Celui-ci, représenté sur la figure 3, comprend lui-même une première et une deuxième voie de sous-échantillonnage spatial prévues en série avec les sorties $S_2$ et $S_1$ respectivement. La première voie comprend un circuit de filtrage spatial $30'a$ et un premier circuit 40a de sous-échantillonnage spatial dans un rapport 1/2 (par exemple un sous-échantillonnage en quinconce ligne, ou bien un sous-échantillonnage orthogonal). La second voie comprend un circuit de filtrage spatial $30''a$ identique au précédent et un deuxième circuit 60a de sous-échantillonnage spatial dans un rapport 1/2, ce dernier sous-échantillonnage étant similaire à ou complémentaire de celui réalisé par le circuit 40a, c'est-à-dire, dans le cas des exemples de maille d'échantillonnage cités, le sous-échantillonnage en quinconce ligne ou le sous-échantillonnage orthogonal identique ou complémentaire.

Des exemples du filtrage réalisé par les circuits de filtrage spatial sont donnés sur les figures 4a à 4c selon la nature de la maille d'échantillonnage : si $f_p$ et fo sont respectivement les fréquences horizontale (points) et verticale (lignes) de l'image, la figure 2a montre le mode de filtrage opéré dans le cas d'un sous-échantillonnage quinconce ligne tel que représenté sur la figure 5a (les croix et points représentent respectivement les points d'image conservés et éliminés lors du sous-échantillonnage), la figure 4b dans le cas d'un sous-échantillonnage orthogonal vertical (omission d'une ligne sur deux, comme indiqué sur la figure 5b), et la figure 4c dans le cas d'un sous-échantillonnage orthogonal horizontal (omission d'un point sur deux sur chaque ligne, en des positions alignées verticalement comme indiqué sur la figure 5c).

Le sous-ensemble de sous-échantillonnage spatial comprend également, en sortie des deux voies en parallèle, un aiguilleur 70a dont la sortie reçoit alternativement soit celle du circuit de sous-échantillonnage spatial 40a, soit celle du circuit de sous-échantillonnage spatial 60a. Ainsi, sur la sortie de l'aiguilleur 70, à partir des échantillons de deux images consécutives, on dispose d'une image complète à la fréquence de 12,5 Hz, cette image étant obtenue par mélange de deux images préalablement filtrées.

Dans le cas de cette variante représentée sur la figure 3, le sous-ensemble de prise de décision, comprend un deuxième commutateur 80"a destiné, sur commande du circuit de décision 90, à sélectionner, en mode compensé, les signaux de sortie du circuit de sous-échantillonnage temporel 10'a ou, en mode de repli, les signaux de sortie de l'aiguilleur 70a. Cette sélection est comme précédemment opérée par bloc, en considérant des blocs 16 x 16 ou des blocs 8 x 8 (sans que ces exemples soient restrictifs). Pour chaque bloc, c'est là encore celui des deux modes qui permet ultérieurement une reconstitution d'image avec une erreur minimale qui est choisi par le circuit de décision.

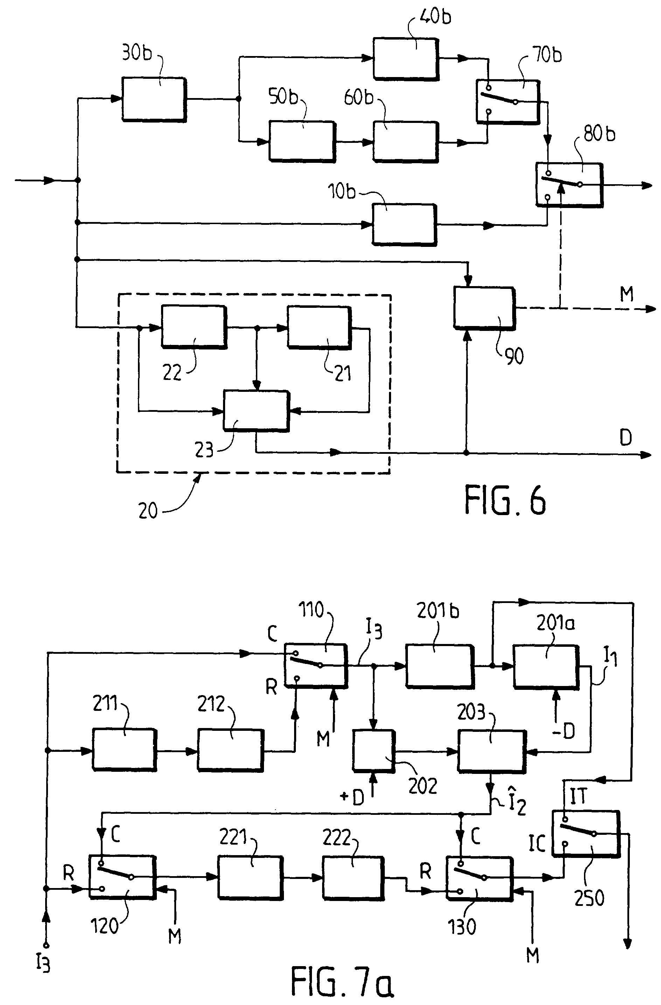

La réalisation du sous-ensemble de traitement de repli correspondant à l'association des figures 1 et 3 n'est pas la seule possible. La figure 6 montre une variante de réalisation du dispositif de traitement de signaux dans laquelle ce dispositif comprend comme précédemment un sous-ensemble de sous-échantillonnage temporel, qui est ici un circuit 10b de sous-échantillonnage temporel dans un rapport 1/2 (identique aux circuits 10'a et 10"a), un sous-ensemble d'estimation de mouvement 20, un sous-ensemble de reconstitution avec compensation de mouvement, et un sous-ensemble de prise de décision, ainsi qu'un sous-ensemble de traitement de repli mais réalisé de la façon suivante : ce sous-ensemble comprend un circuit de filtrage spatial 30b, destiné à limiter la bande passante des signaux, puis deux voies en parallèle, dont la première comprend un premier circuit 40b de sous-échantillonnage spatial dans un rapport 1/2 (par exemple un sous-échantillonnage en quinconce ligne, ou bien un sous-échantillonnage orthogonal) et dont la seconde comprend un circuit de retard 50b et un deuxième circuit 60b de sous-échantillonnage spatial dans un rapport 1/2. Le retard apporté par le circuit 50b est égal à la période des signaux d'origine (ici 25 Hz). Le sous-échantillonnage spatial dû au circuit 60b est similaire à ou complémentaire de celui réalisé par le circuit 40b, c'est-à-dire, dans le cas des exemples de maille d'échantillonnage cités, le sous-échantillonnage quinconce ligne ou le sous-échantillonnage orthogonal identique ou complémentaire. Le sous-ensemble de traitement de repli comprend enfin, en sortie des deux voies en parallèle, un aiguilleur 70b dont la sortie reçoit alternativement soit celle du circuit de sous-échantillonnage spatial 40b, soit celle du circuit de sous-échantillonnage spatial 60b. Ainsi, sur la sortie de l'aiguilleur 70b, à partir des échantillons de deux images consécutives, on dispose là encore d'une image complète à la fréquence de 12,5 Hz, obtenue par mélange de deux images préalablement filtrées. Le sous-ensemble de prise de décision comprend cette fois un commutateur 80b, commandé par le circuit de décision 90 pour sélectionner, en mode compensé, les signaux de sortie du circuit de sous-échantillonnage temporel 10b ou, en mode de repli, les signaux de sortie de l'aiguilleur 70b.

On notera ici, que l'invention n'est pas limitée aux dispositifs de traitement décrits, mais qu'elle concerne aussi tout système de transmission et/ou de stockage de signaux comprenant d'une part un étage destiné à émettre des informations représentatives de ces signaux vers un support de transmission ou de stockage de ces informations, et d'autre part un étage destiné à recevoir des informations ainsi transmises et/ou lire les informations ainsi stockées : dans le cas où ce support est à bande passante limitée et où un traitement de réduction de la quantité d'informations devant être transmises et/ou stockées s'avère nécessaire, l'invention concerne un tel système lorsque son étage d'émission inclut un des dispositifs de traitement de signaux tels que décrits précédemment.

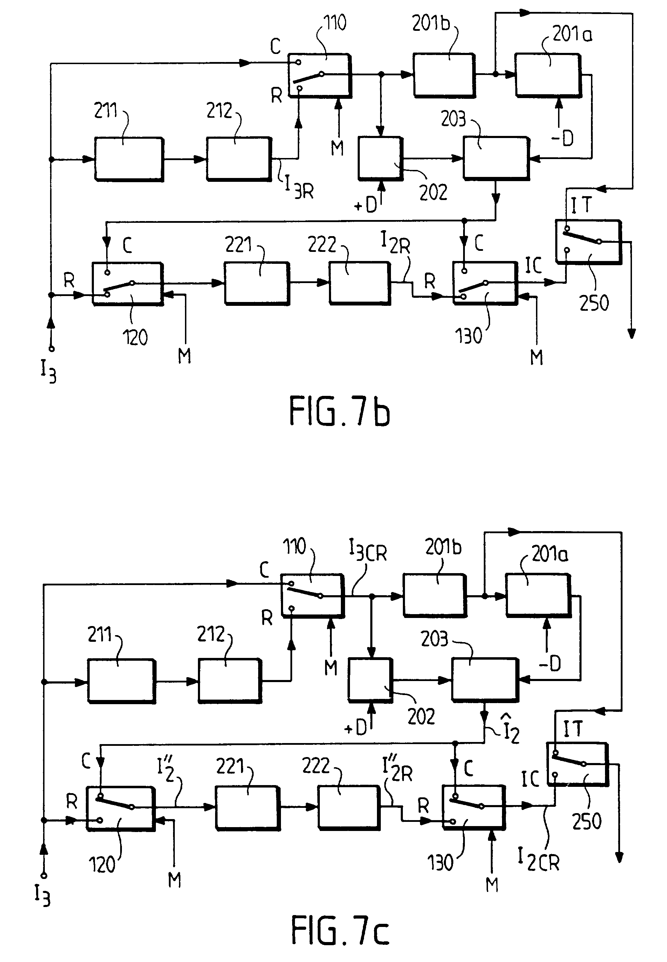

Réciproquement, lorsque des informations ont été traitées par un dispositif de traitement de signaux tel que ceux qui viennent d'être décrits, on prévoit ensuite de restituer des signaux à la fréquence temporelle d'origine. Cette opération peut alors être réalisée par un post-traitement qui est décrit maintenant en liaison avec la figure 7 dans le cas où un sous-échantillonnage spatial a été prévu à l'émission. La structure du dispositif en l'absence d'un tel sous-échantillonnage spatial à l'émission se déduit ensuite aisément de cette figure 7.

Le dispositif de traitement de signaux représenté sur la figure 7 dans trois situations distinctes correspondant respectivement aux figures 7a, 7b et 7c et expliquées plus loin reçoit, dans l'exemple décrit, des images d'entrée à la fréquence de 12,5 Hz (se succédant donc toutes les 80 millisecondes) et l'on veut disposer, en sortie du dispositif, d'images à la fréquence de 25 Hz. Les images d'entrée sont accompagnées des informations de mouvement D et des informations M relatives au mode (mode de compensation de mouvement, ou mode de repli), ces informations de mouvement et de mode ayant été également transmises et/ou stockées par l'intermédiaire dudit support (voir la figure 1 ou la figure 6).

Le dispositif de traitement des figures 7a à 7c comprend alors, tout d'abord, un sous-ensemble de compensation de mouvement ("motion compensation sub-assembly"), comprenant lui-même des mémoires d'image 201a, 201b et 202 et un additionneur 203. Ce sous-ensemble de compensation de mouvement est précédé d'un commutateur 110 qui reçoit sur une première borne d'entrée directement les images d'entrée, et sur une deuxième borne d'entrée ces mêmes images d'entrée mais par l'intermédiaire d'un premier sous-ensemble de sous-échantillonnage et d'interpolation ("subsampling and interpolation sub-assembly"). Ce premier sous-ensemble de sous-échantillonnage et d'interpolation comprend un premier circuit de sous-échantillonnage spatial 211 et un premier circuit d'interpolation spatiale 212, adapté bien entendu au mode de sous-échantillonnage utilisé dans le circuit 211. Le commutateur 110 reçoit pour chaque bloc d'image l'information de mode et, en fonction de celle-ci, bascule en position de liaison directe avec l'entrée (mode de compensation de mouvement, noté C à l'entrée correspondante du commutateur 110), ou au contraire dans la position opposée (mode de repli, noté R à l'entrée correspondante du commutateur 110), pour sélectionner dans cette position les signaux de sortie du premier sous-ensemble de sous-échantillonnage et d'interpolation.

Le dispositif de traitement des figures 7a à 7c comprend également un deuxième sous-ensemble de sous-échantillonnage et d'interpolation, comprenant lui-même un deuxième circuit de sous-échantillonnage spatial 221 et un deuxième circuit d'interpolation spatiale 222, similaires respectivement aux circuits 211 et 212. Ce deuxième sous-ensemble de sous-échantillonnage et d'interpolation (221, 222) est précédé d'un commutateur 120 et suivi d'un commutateur 130. Le commutateur 120 reçoit sur une première borne d'entrée les signaux de sortie du sous-ensemble de compensation de mouvement, et sur une deuxième borne d'entrée directement les images d'entrée, et, selon l'information de mode reçue, sélectionne soit les signaux compensés en mouvement (mode de compensation de mouvement, noté C), soit les images d'entrée (mode de repli, noté R). Le commutateur 130 reçoit sur une première borne d'entrée également les signaux de sortie du sous-ensemble de compensation de mouvement, et sur une deuxième entrée les signaux de sortie du deuxième sous-ensemble de sous-échantillonnage et d'interpolation, et, selon l'information de mode reçue, sélectionne soit les signaux compensés en mouvement (mode de compensation de mouvement, noté C), soit les signaux de sortie du deuxième sous-ensemble de sous-échantillonnage et d'interpolation (mode de repli, noté R).

Le dispositif de traitement des figures 7a à 7c comprend enfin un commutateur 250 qui, à un rythme double de celui des images d'entrées (à la fréquence de 25 Hz dans le cas présent, puisque les images d'entrée ont ici une fréquence de 12,5 Hz), sélectionne alternativement la sortie du commutateur 130 ou celle de la mémoire d'image 201b.

Le fonctionnement de ce dispositif de traitement va maintenant être décrit dans les trois situations qui peuvent être rencontrées, en référence aux figures correspondantes 7a à 7c. On rappellera préalablement que les images d'entrée du dispositif peuvent être constituées de blocs d'image traités, avant transmission et/ou stockage, soit selon le mode de compensation de mouvement, soit selon le mode de repli, soit encore selon l'un ou l'autre de ces deux modes, ces trois alternatives correspondant auxdites trois situations.

On suppose d'abord (première situation, représentée sur la figure 7a) que les images d'entrée sont constituées exclusivement de blocs d'image traités, avant transmission et/ou stockage, selon le mode dit de compensation de mouvement. L'information de mode correspondante maintient alors les trois commutateurs 110 à 130 dans leur position C. Si, par ailleurs, on appelle $I_1$, $I_3$, $I_5$, $I_7$, etc... la séquence des images d'entrées et qu'à un instant considéré $t_c$ l'image $I_1$ (compensée par -D) est disponible en sortie de la mémoire d'image 201a, au même moment l'image $I_3$, apparue 80 ms plus tard que $I_1$, est disponible à l'entrée de la mémoire d'image 201b. Le commutateur 250 sélectionne alors, dans sa position notée IC, la sortie de l'additionneur 203 du sous-ensemble de compensation de mouvement. L'image notée $\hat{I}_2$ disponible sur cette sortie est l'image de parité opposée à celle des images $I_1$ et $I_3$ et qui est reconstituée, entre ces deux images, à 40 ms de chacune d'elles, par demi-somme de ces images $I_1$ et $I_3$ et compte tenu de la direction du vecteur de déplacement D (préalablement sélectionné et fourni audit sous-ensemble de compensation de mouvement). A la fréquence de 25 Hz, c'est-à-dire 40 ms plus tard, le commutateur 250 a basculé et sélectionne, dans sa position notée IT, la sortie de la mémoire 201b, cette sortie étant maintenant $I_3$ puisque $I_3$ était 40 ms plus tôt à l'entrée de la mémoire 201b.

Le même cycle de basculement se poursuit alors, et le commutateur 250 sélectionne ensuite l'image $\hat{I}_4$, moyenne pondérée de $I_3$ et $I_5$ dans la direction du nouveau vecteur de déplacement sélectionné, puis l'image $I_5$, puis $\hat{I}_6$, $I_7$, $\hat{I}_8$, $I_9$, etc... En définitive, on dispose, en sortie du commutateur 250 et donc du dispositif de traitement de la figure 7a, d'une séquence d'images du type $I_1$, $\hat{I}_2$, $I_3$, $\hat{I}_4$, $I_5$, $\hat{I}_6$, $I_7$, etc..., à une fréquence double de celle des images d'entrée.

On suppose maintenant (deuxième situation, représentée sur la figure 7b) que les images d'entrée sont constituées exclusivement de blocs d'image traités, avant transmission et/ou stockage, selon le mode dit de repli. L'information de mode correspondante maintient cette fois les trois commutateurs 110 à 130 dans leur position R. Le circuit de sous-échantillonnage spatial 211 sous-échantillonne les images de parité déterminée (impaires par exemple, c'est-à-dire les images $I_1$, $I_3$, $I_5$, etc...) selon la même phase de maille d'échantillonnage que celle employée lors du traitement à l'émission, puis le circuit d'interpolation spatiale 212 reconstitue les échantillons manquants. Si pour une image d'entrée $I_3$, l'on appelle $I_{3R}$ l'image disponible en sortie du circuit 212 du premier sous-ensemble de sous-échantillonnage et d'interpolation, on constate alors que, maintenant, l'image $I_{3R}$ s'est substituée à l'image d'entrée $I_3$.

De même, le circuit de sous-échantillonnage spatial 221 et le circuit d'interpolation spatiale 222 assurent respectivement le sous-échantillonnage des images de parité opposée (par exemple les images paires $I_2$, $I_4$, $I_6$, etc...), selon la même phase de maille d'échantillonnage que celle employée précédemment, et la reconstitution des échantillons manquants. Pour une image d'entrée $I_3$, on appelle maintenant $I_{2R}$ cette image reconstituée en sortie du circuit 222 du deuxième sous-ensemble de sous-échantillonnage et d'interpolation. Le commutateur 250 sélectionne alors, dans sa position dite IC, l'image notée $I_{2R}$ et disponible en sortie dudit deuxième sous-ensemble, et, dans sa position dite IT, l'image notée $I_{3R}$, disponible 40 ms plus tôt en sortie du premier sous-ensemble de sous-échantillonnage et d'interpolation et maintenant présente en sortie de la mémoire d'image 201b. On dispose cette fois, en sortie du dispositif de traitement de la figure 7b, d'une séquence d'images du type $I_{1R}$, $I_{2R}$, $I_{3R}$, $I_{4R}$, $I_{5R}$, etc..., toujours à une fréquence double de celle des images d'entrée.

On suppose enfin (troisième situation représentée sur la figure 7c et, en général, la plus fréquente) que les images d'entrée sont constituées à la fois de blocs d'image traités à l'émission selon le mode de compensation de mouvement et de blocs d'image traités à l'émission selon le mode de repli. L'information de mode, correspondant à chacun de ces deux modes, place alors les trois commutateurs 110, 120, 130 alternativement dans leur position C ou dans leur position R, selon le type de traitement préalable subi par les blocs d'image qui se présentent à l'entrée du dispositif de traitement : les traitements subis dans ce dispositif vont alors être ceux subis dans le cas de la première ou de la deuxième situation, selon le cas.

En effet, dans le cas de blocs en mode de repli, le premier sous-ensemble (211, 212) de sous-échantillonnage et d'interpolation assure successivement la restitution des échantillons des images de parité déterminée (impaires par exemple) et la reconstitution des échantillons manquants. Les blocs $I_{3R}$ disponibles en sortie dudit premier sous-ensemble sont alors réinsérés par le commutateur 110 dans l'image d'entrée $I_3$, pour constituer la future image de sortie appelée $I_{3CR}$. De même, dans le cas de blocs en mode de repli, le deuxième sous-ensemble (221, 222) de sous-échantillonnage et d'interpolation assure la reconstitution des images de parité opposée (ici, paires), en traitant les signaux de sortie du commutateur 120 qui a pour rôle, dans cette troisième situation, d'insérer les blocs compensés $I_2$ (disponibles, de façon déjà décrite, en sortie du sous-ensemble de compensation de mouvement 201a à 203) dans l'image d'entrée $I_3$. L'image ainsi constituée à l'entrée dudit deuxième sous-ensemble est notée $I_2''$, et celle à sa sortie est notée $I_{2R}''$. Le commutateur 130 permet alors de compléter la future image $I_{2CR}$ de sortie en sélectionnant, en fonction de l'information de mode qu'il reçoit et qui commande sa position, soit les blocs compensés $\hat{I}_2$ de sortie du sous-ensemble de compensation de mouvement, soit les blocs interpolés $I_{2R}''$ de sortie du deuxième sous-ensemble de sous-échantillonnage et d'interpolation.

Le commutateur 250 peut alors, dans cette troisième situation, sélectionner maintenant soit, dans sa position dite IC, l'image $I_{2CR}$ de sortie du commutateur 130, soit, dans sa position dite IT, l'image $I_{3CR}$ disponible 40 ms plus tôt en sortie du commutateur 110 et maintenant présente en sortie de la mémoire d'image 201b. On dispose à nouveau, en sortie du dispositif de traitement de la figure 7c, d'une séquence d'images du type $I_{1CR}$, $I_{2CR}$, $I_{3CR}$, $I_{4CR}$, $I_{5CR}$, etc..., là encore à une fréquence double de celle des images d'entrée.

Le dispositif de traitement de signaux après transmission et/ou stockage qui vient d'être décrit en référence à la figure 7 correspond au dispositif de traitement de signaux avant transmission et/ou stockage décrit en liaison avec les figures 1 et 3 associées. En l'absence de sous-échantillonnage spatial à l'émission (c'est-à-dire avec le sous-ensemble de traitement de repli tel que représenté sur la figure 1 seule), le dispositif de traitement de la figure 7 se simplifie de la façon suivante. D'une part les deux sous-ensembles (211, 212) et (221, 222) de sous-échantillonnage et d'interpolation sont supprimés, ainsi que les commutateurs correspondants 110 et 120. D'autre part, les signaux correspondant aux signaux $S_1$ et $S_2$ de la figure 1 sont maintenant, compte tenu de cette suppression, fournis respectivement à l'entrée du sous-ensemble de compensation de mouvement (entrée commune aux mémoires 201b et 202) et à l'entrée R du commutateur 130. Ces modifications, pouvant être facilement comprises à partir de la figure 7, ne sont donc pas représentées.

Bien entendu, la présente invention n'est pas limitée aux exemples ainsi décrits, à partir desquels des variantes peuvent être proposées sans pour cela sortir du cadre de l'invention. Certaines de ces variantes ont déjà été mentionnées. On notera également que le critère retenu pour déterminer que le circuit d'estimation de mouvement 20 est défaillant et doit être relayé par le sous-ensemble de traitement de repli peut correspondre à un large éventail de situations. Le critère principal pouvant être retenu est par exemple le fait que le mouvement est, ou non, trop rapide et qu'alors le circuit d'estimation de mouvement sort de sa plage de fonctionnement. Mais on peut aussi prévoir une commande du basculement en mode de repli lorsque le bruit devient trop important et entraîne des erreurs d'estimation, ou bien lorsqu'on se trouve dans une zone d'image où les objets ont des mouvements contradictoires et mettent en défaut le circuit d'estimation de mouvement.

Par ailleurs, il est manifeste, là encore, que l'invention n'est pas limitée aux dispositifs de traitement qui viennent d'être décrits, mais qu'elle concerne aussi tout système de transmission et/ou de stockage de signaux comprenant d'une part un étage destiné à émettre des informations représentatives de ces signaux vers un support de transmission ou de stockage de ces informations, et d'autre part un étage destiné à recevoir des informations ainsi transmises et/ou lire les informations ainsi stockées : dans le cas où ce support est à bande passante limitée et où un traitement de réduction de la quantité d'information devant être transmises et/ou stockées s'avère nécessaire, l'invention concerne un tel système lorsque son étage de réception inclut un des dispositifs de traitement de signaux tels que décrits précédemment.

**Revendications**

1. Dispositif de traitement de signaux regroupés par lots périodiques, tels que des images, et destinés à être, par blocs, transmis et/ou stockés par l'intermédiaire d'un support à bande passante limitée impliquant une réduction de la quantité d'informations à transmettre et/ou stocker, comprenant :

   (a) un sous-ensemble de sous-échantillonnage temporel, prévu pour délivrer, selon un premier mode, dit compensé, de transmission et/ou de stockage une première séquence de signaux à transmettre et/ou stocker de fréquence deux fois plus faible que celle des lots de signaux d'origine ;
   (b) un sous-ensemble (20) d'estimation du mouvement entre blocs appartenant à des lots périodiques successifs, prévu pour délivrer, par bloc, une information de mouvement à transmettre et/ou stocker en remplacement de ceux des blocs éliminés par ledit sous-échantillonnage temporel ;
   (c) un sous-ensemble de reconstitution avec compensation de mouvement (91a, 91b, 92, 93) ;
       ledit dispositif étant caractérisé en ce qu'il comprend également :
   (d) un sous-ensemble de traitement de repli prévu pour adjoindre par bloc à ladite première séquence au moins une deuxième séquence de signaux synchrone de la première et délivrée selon un deuxième mode dit de repli se substituant audit premier mode compensé en fonction du résultat, fourni par un sous-ensemble de prise de décision, d'une comparaison entre les signaux d'origine et les signaux restitués par ledit sous-ensemble de reconstitution avec compensation de mouvement à partir des blocs transmis et/ou stockés et des informations de mouvement.

2. Dispositif selon la revendication 1, caractérisé en ce que le sous-ensemble de prise de décision comprend un interrupteur (80'a) commandé par un circuit de décision (94, 95, 96, 97, 98, 99, 100, 101, 102, 103) pour ne sélectionner, en mode compensé, que les signaux de sortie du sous-ensemble de sous-échantillonnage temporel (10'a) et, en mode de repli, également les signaux de sortie du sous-ensemble de traitement de repli.

3. Dispositif selon l'une des revendications 1 et 2, caractérisé en ce que le sous-ensemble de traitement de repli comprend un circuit de retard (50) égal à la période des signaux d'origine, suivi d'un circuit (10"a) de sous-échantillonnage temporel dans le même rapport que celui du sous-ensemble de sous-échantillonnage temporel.

4. Dispositif selon l'une des revendications 1 à 3, caractérisé en ce que le sous-ensemble de traitement de repli comprend également un sous-ensemble de sous-échantillonnage spatial comprenant lui-même, en parallèle, une première voie (30'a, 40a) et une deuxième voie (30"a, 60a) de sous-échantillonnage spatial dans le même rapport que celui de sous-échantillonnage temporel, la maille de sous-échantillonnage spatial de chaque voie étant indépendante du mouvement et fixe à la résolution temporelle des signaux près.

5. Dispositif selon la revendication 4, caractérisé en ce que :

   (A) le sous-ensemble de sous-échantillonnage spatial comprend, dans chaque voie, un circuit de filtrage spatial (30'a, 30"a) suivi d'un circuit (40a, 60a) de sous-échantillonnage spatial dans un rapport 1/2, et, en sortie des deux voies, un aiguilleur (70a) prévu pour sélectionner, à une fréquence deux fois plus faible que celle des signaux d'origine, alternativement l'une ou l'autre des sorties desdits circuits de sous-échantillonnage spatial ;
   (B) le sous-ensemble de prise de décision comprend un commutateur (80"a) commandé pour sélectionner, en mode compensé, les signaux de sortie du sous-ensemble de sous-échantillonnage temporel (10'a) ou, en mode de repli, les signaux de sortie dudit aiguilleur (70a).

6. Dispositif selon la revendication 5, dans le cas où lesdits signaux sont des signaux représentatifs d'images, caractérisé en ce que la sélection effectuée dans le sous-ensemble de prise de décision est opérée par bloc d'image et après des calculs d'erreur d'interpolation et d'erreur de repli comparées pour sélectionner la plus faible.

7. Dispositif selon la revendication 6, caractérisé en ce que le support à bande passante limitée est du type disque compact.

8. Système de transmission et/ou de stockage de signaux comprenant un étage d'émission et, après transmission et/ou stockage des signaux émis sur un support à bande passante limitée impliquant un traitement de réduction de la quantité d'informations à transmettre et/ou à stocker, un étage de réception et/ou de lecture des signaux transmis et/ou stockés, caractérisé en ce que ledit étage d'émission comprend un dispositif selon l'une des revendications 1 à 7.

9. Dispositif de traitement de signaux préalablement transmis et/ou stockés après une réduction de la quantité d'informations à transmettre et/ou stocker, opérée soit selon un premier mode dit compensé et à l'aide d'un sous-ensemble de sous-échantillonnage temporel prévu pour délivrer une première séquence de signaux, soit selon un deuxième mode dit de repli et à l'aide d'un sous-ensemble de traitement de repli prévu pour adjoindre à ladite première séquence une deuxième séquence de signaux synchrone de la première, le choix dudit mode étant opéré avec émission d'une information de mode, à l'aide d'un sous-ensemble de prise de décision, et sur la base d'informations de mouvement, également transmises et/ou stockées, et d'une comparaison d'informations liées respectivement à l'un ou l'autre mode, caractérisé en ce qu'il comprend :

    (a) un sous-ensemble de compensation de mouvement (201a, 201b, 202, 203), prévu pour recevoir les signaux transmis et/ou stockés correspondant aux signaux de sortie dudit sous-ensemble de sous-échantillonnage temporel ;

    (b) un commutateur (130) recevant sur une première entrée la sortie du sous-ensemble de compensation de mouvement et sur une deuxième entrée les signaux transmis et/ou stockés correspondant aux signaux de sortie dudit sous-ensemble de traitement de repli et délivrant sur sa sortie, respectivement selon ladite information de mode correspondant à la sélection du premier ou du deuxième mode, soit les signaux présents sur ladite première entrée, soit les signaux présents sur ladite deuxième entrée ;

    (c) un commutateur (250) de sélection alternée, à une fréquence double de celle des signaux d'entrée, soit de ladite sortie de ce commutateur (130), soit de l'entrée dudit sous-ensemble de compensation de mouvement mais retardée d'une demi-période de la cadence desdits signaux d'entrée du dispositif de traitement de signaux.

10. Dispositif de traitement de signaux préalablement transmis et/ou stockés après une réduction de la quantité d'informations à transmettre et/ou stocker, opérée soit selon un premier mode dit compensé de transmission et/ou de stockage et à l'aide d'un sous-ensemble de sous-échantillonnage temporel dans un rapport déterminé prévu pour délivrer une première séquence de signaux, soit selon un deuxième mode dit de repli et à l'aide d'un sous-ensemble de traitement de repli prévu pour adjoindre à ladite première séquence une deuxième séquence de signaux et opérer, après sous-échantillonnage spatial desdites séquences, la sélection alternative de l'une ou l'autre de ces séquences spatialement sous-échantillonnées, le choix dudit mode étant opéré avec émission d'une information de mode, à l'aide d'un sous-ensemble de prise de décision, et sur la base d'informations de mouvement, également transmises et/ou stockées, et d'une comparaison d'informations liées respectivement à l'un ou l'autre mode, en vue de la sélection soit de la sortie dudit sous-ensemble de compensation de mouvement soit de la sortie dudit sous-ensemble de traitement de repli, caractérisé en ce qu'il comprend :

    a) un premier sous-ensemble (211, 212) de sous-échantillonnage et d'interpolation des signaux reçus correspondant aux signaux préalablement transmis et/ou stockés et constituant les signaux d'entrée du dispositif ;

    b) un sous-ensemble de compensation de mouvement (201a, 201b, 202, 203), dont l'entrée est reliée, respectivement selon ladite sélection du premier ou du deuxième mode, soit directement à l'entrée dudit dispositif, soit à cette même entrée mais par l'intermédiaire dudit premier sous-ensemble de sous-échantillonnage et d'interpolation ;

    c) un deuxième sous-ensemble de sous-échantillonnage et d'interpolation (221, 222) dont l'entrée est reliée, respectivement selon ladite sélection du premier ou du deuxième mode, soit à la sortie dudit sous-ensemble de compensation de mouvement, soit directement à l'entrée dudit dispositif ;

    d) un commutateur (130), délivrant sur sa sortie, respectivement selon ladite information de mode correspondant à la sélection du premier ou du deuxième mode, soit la sortie dudit sous-ensemble de compensation de mouvement, soit la sortie dudit deuxième sous-ensemble de sous-échantillonnage et d'interpolation ;

    (e) un commutateur (250) de sélection alternée, à une fréquence double de celle des signaux d'entrée, soit de ladite sortie de ce commutateur (130), soit de l'entrée dudit sous-ensemble de compensation de mouvement mais retardée d'une demi-période de la cadence desdits signaux d'entrée du dispositif.

11. Dispositif selon la revendication 10, caractérisé en ce que les premier et deuxième sous-ensembles de sous-échantillonnage et d'interpolation comprennent chacun un circuit de sous-échantillonnage spatial (211, 221) et un circuit d'interpolation spatiale (212, 222), et en ce que le sous-ensemble de compensation de mouvement comprend des mémoires d'image (201a, 201b, 202) et un additionneur (203), en vue d'une interpolation compensée en mouvement à partir de l'image de sortie de la première de ces mémoires, de l'image d'entrée de la deuxième de ces mémoires, et de l'information de mouvement entre lesdites images d'entrée et de sortie, le retard apporté par chacune desdites mémoires étant égal à la moitié de la période des signaux d'entrée du dispositif de traitement.

12. Dispositif selon l'une des revendications 10 et 11, caractérisé en ce que la sélection à l'entrée du sous-ensemble

EP 0 404 238 B1

de compensation de mouvement et celle à l'entrée du deuxième sous-ensemble de sous-échantillonnage et d'interpolation sont opérées respectivement à l'aide d'un premier et d'un deuxième commutateur (110, 120) commandés par ladite information de mode.

13. Système de transmission et/ou de stockage de signaux comprenant un étage d'émission et, après transmission et/ou stockage des signaux émis sur un support à bande passante limitée impliquant un traitement de réduction de la quantité d'informations à transmettre et/ou à stocker, un étage de réception et/ou de lecture des signaux transmis et/ou stockés, caractérisé en ce que ledit étage de réception et/ou de lecture comprend un dispositif de traitement de signaux selon l'une des revendications 9 à 12.


**Patentansprüche**

1. Einrichtung zur Verarbeitung von Signalen, die in periodische Gefüge gruppiert sind, wie bei Bildern, und blockweise übertragen und/oder gespeichert werden müssen über paßbandbeschränkte Informationsträger, was eine Verringerung der Menge zu übertragender und/oder zu speichernder Informationsanteile erfordert, mit:

   (a) einer Hilfsstufe zur zeitlichen Unterabtastung zum Liefern bei einer ersten Übertragungs- und/oder Speichermode, die als ausgeglichene Mode bezeichnet wird, einer ersten Folge zu übertragender und/oder zu speichernder Signale mit einer Rate, die zweimal niedriger ist als die der ursprünglichen Signalgruppe;
   (b) einer Bewegungsschätz-Hilfsstufe (20) zum Schätzen von Bewegung zwischen Blöcken, die aufeinanderfolgenden periodischen Gruppen zugeordnet sind, zum blockweisen Liefern einer zu übertragenden und/oder zu speichernden Bewegungsinformation, dadurch, daß diejenigen Blöcke, die durch die genannte zeitliche Unterabtastung eliminiert worden sind, ersetzt werden;
   (c) einer wiederherstellenden Hilfsstufe mit Bewegungskompensation (91a, 91b, 92, 93);
   dadurch gekennzeichnet, daß die genannte Einrichtung ebenfalls die nachfolgenden Elemente aufweist:
   (d) eine Rückfall-Verarbeitungsanordnung zum blockweisen Hinzufügen wenigstens einer zu der ersten Folge synchronen zweiten Signalfolge zu der genannten ersten Signalfolge, wobei diese zweite Folge nach einer zweiten Rückfall-Mode geliefert wird, welche die erste kompensierte Mode als Funktion des Ergebnisses der Entscheidungs-Hilfsstufe auf Basis eines Vergleichs ersetzt, eines Vergleichs zwischen den ursprünglichen Signalen und den durch die genannte Wiederherstellungs-Hilfsstufe mit Bewegungskompensation wiederhergestellten Signalen auf Basis übertragener und/oder gespeicherter Blöcke und auf Basis von Bewegungsinformationsanteilen.

2. Einrichtung nach Anspruch 1, dadurch gekennzeichnet, daß die Entscheidungshilfsstufe einen Schalter (80'a) aufweist, der durch eine Entscheidungsschaltung (94, 95, 96, 97, 98, 99, 100, 101, 102, 103) gesteuert wird zur Selektion, in der kompensierten Mode, nur der Ausgangssignale der Hilfsstufe zur zeitlichen Unterabtastung (10'a), und in der Rückfall-Mode ebenfalls der Ausgangssignale der Hilfsstufe zur Rückfallverarbeitung.

3. Einrichtung nach einem der Ansprüche 1 und 2, dadurch gekennzeichnet, daß die Rückfall-Verarbeitungsanordnung eine Verzögerungsschaltung (50) aufweist, die eine Verzögerung entsprechend der Periode der ursprünglichen Signale verursacht, mit einer nachfolgenden zeitlichen Unterabtastungsschaltung (10"a) mit demselben Verhältnis wie das der zeitlichen Unterabtastungs-Hilfsstufe.

4. Einrichtung nach einem der Ansprüche 1 bis 3, dadurch gekennzeichnet, daß die Rückfall-Verarbeitungs-Hilfsstufe ebenfalls eine räumliche Unterabtastungs-Hilfsstufe aufweist, die selbst parallel eine erste (30'a, 40a) und eine zweite räumliche Unterabtastungsstrecke (30"a, 60a) aufweist mit demselben Verhältnis wie das der zeitlichen Unterabtastung, wobei die räumliche Unterabtastungsmatrix jeder Strecke unabhängig ist von der Bewegung und nur für die zeitliche Auflösung der Signale fest ist.

5. Einrichtung nach Anspruch 4, dadurch gekennzeichnet, daß

   (A) die räumliche Unterabtastungs-Hilfsstufe in jeder Strecke eine räumliche Filterschaltung (30'a, 30"a) aufweist, mit einer nachfolgenden räumlichen Unterabtastungsschaltung (40a, 60a), die mit einem Verhältnis 1/2 arbeitet, und mit, am Ausgang der zwei Strecken, einer Umschaltschaltung (70a) zum wechselweisen Selektieren des einen oder des anderen Ausgangssignal der genannten räumlichen Unterabtastungsschaltungen mit einer Frequenz, die zweimal niedriger ist als die der ursprünglichen Signale;
   (B) die Entscheidungs-Hilfsstufe einen Umschalter (80"a) aufweist, der gesteuert wird zum in der kompensierten

12

Mode Selektieren der Ausgangssignale der zeitlichen Unterabtastungs-Hilfsstufe (10'a) oder, in der Rückfall-Mode, der Ausgangssignale der genannten Umschaltschaltung (70a).

6. Einrichtung nach Anspruch 5, in dem fall, wo die genannten Signale Signale sind, die repräsentativ sind für Bilder, dadurch gekennzeichnet, daß die Selektion in der Entscheidungsschaltung je Bildblock und nach Interpolationsfehler- und Rücktallfehlerberechnungen, verglichen zum Selektieren des kleinsten Fehlers, erfolgt.

7. Einrichtung nach Anspruch 6, dadurch gekennzeichnet, daß der träger mit dem beschränkten Paßband vom CD-Typ ist.

8. Übertragungs- und/oder Speichersystem zur Übertragung und/oder Speicherung von Signalen mit einer Übertragungsstufe und, nach Übertragung und/oder Speicherung der über einen paßbandbeschränkten Informationsträger übertragenen Signale, zur Reduktionsverarbeitung der Menge zu übertragender und/oder zu speichernder Informationsanteile und mit einer Empfangs- und/oder Lesestufe für die übertragenen und/oder gespeicherten Signale, dadurch gekennzeichnet, daß die genannte Übertragungsstufe eine Verarbeitungseinrichtung nach einem der Ansprüche 1 bis 7 aufweist.

9. Anordnung zur Verarbeitung vorher übertragener und/oder gespeicherter Signale nach einer Verringerung der Menge zu übertragender und/oder zu speichernder Informationsanteile, entweder nach einer ersten kompensierten Mode und mit Hilfe einer Hilfsstufe zur zeitlichen Unterabtastung, zum Liefern einer ersten Signalfolge, oder nach einer zweiten Rückfall-Mode und mit Hilfe einer Hilfsstufe zur Rückfall-Verarbeitung, zum synchron zu der ersten Folge Hinzufügen einer zweiten Signalfolge zu der genannten ersten Folge mit einer räumlichen Hilfsstufe der genannten Folgen, und zum Durchführen der wechselnden Selektion der einen oder der anderen dieser räumlich unterabgetasteten Folgen, wobei die Wahl der genannten Mode bei der Übertragung eines Mode-Informationsanteils und mit Hilfe einer Entscheidungs-Hilfsstufe und auf Basis von Bewegungsinformationsanteilen erfolgt, die ebenfalls übertragen und/oder gespeichert werden, und einen Vergleich der Informationsanteile, die der einen bzw. der anderen Mode zugeordnet sind, im Hinblick auf die Selektion des Ausgangssignals der genannten bewegungskompensierten Hilfsstufe oder des Ausgangssignals der genannten Rückfallverarbeitungs-Hilfsstufe, dadurch gekennzeichnet, daß sie die nachfolgenden Elemente aufweist:

(a) eine Bewegungskompensations-Hilfsstufe (201a, 201b, 202, 203) zum Empfangen der übertragenen und/oder gespeicherten Signale entsprechend den Ausgangssignalen der genannten zeitlichen Unterabtastungs-Hilfsstufe;

(b) einen Umschalter (130), der an einem ersten Eingang das Ausgangssignal der Bewegungskompensations-Hilfsstufe erhält und an einem zweiten Eingang die übertragenen und/oder gespeicherten Signale entsprechend den Ausgangssignalen der genannten Rücktall-Verarbeitungs-Hilfsstufe und an seinem Ausgang, entsprechend der genannten Mode-Information entsprechend der Selektion der ersten oder der zweiten Mode, entweder die Signale an dem genannten ersten Eingang bzw. die Signale an dem genannten zweiten Eingang liefert;

(c) einen Umschalter (250) zum wechselweisen Selektieren mit einer Frequenz, die zweimal höher ist als die der Eingangssignale, entweder des genannten Ausgangssignals dieses Umschalters (130), oder des Eingangssignale der genannten Bewegungskompensations-Hilfsstufe, aber um eine halbe Periode der Rate der genannten Eingangssignale der Signalverarbeitungsanordnung verzögert.

10. Anordnung zur Verarbeitung von Signalen vor der Übertragung und/oder Speicherung nach einer Verringerung der Menge zu übertragender und/oder zu speichernder Informationsanteile, entweder nach einer ersten kompensierten Übertragungs- und/oder Speicher-Mode und mit Hilfe einer Hilfsstufe zur zeitlichen Unterabtastung, in einem bestimmten Verhältnis zum Liefern einer ersten Signalfolge, oder nach einer zweiten Rückfall-Mode und mit Hilfe einer Hilfsstufe zur Rückfall-Verarbeitung, zum synchron zu der ersten Folge Hinzufügen einer zweiten Signalfolge zu der genannten ersten Folge mit einer räumlichen Hilfsstufe der genannten Folgen, und zum Durchführen der wechselnden Selektion der einen oder der anderen dieser räumlich unterabgetasteten Folgen, wobei die Wahl der genannten Mode bei der Übertragung eines Mode-Informationsanteils mit Hilfe einer Entscheidungs-Hilfsstufe auf Basis von Bewegungsinformationsanteilen erfolgt, die ebenfalls übertragen und/oder gespeichert werden, und auf Basis eines Vergleichs der Informationsanteile, die der einen bzw. der anderen Mode zugeordnet sind, im Hinblick auf die Selektion des Ausgangssignals der genannten bewegungskompensierten Hilfsstufe oder des Ausgangssignals der genannten Rückfallverarbeitungs-Hilfsstufe, dadurch gekennzeichnet, daß die Anordnung die folgenden Elemente aufweist:

(a) eine erste Hilfsstufe (211, 212) zur Unterabtastung und Interpolation der empfangenen Signale, die den vorher übertragenen und/oder gespeicherten Signalen entsprechen und die Eingangssignale der Anordnung bilden;

(b) eine Bewegungskompensations-Hilfsstufe (201a, 201b, 202, 203), deren Eingang entsprechend der genannten Selektion der ersten bzw. zweiten Mode entweder unmittelbar mit dem Eingang der genannten Anordnung oder mit diesem selben Eingang, aber über die genannte erste Unterabtastungs- und Interpolations-Hilfsstufe verbunden ist;

(c) eine zweite Unterabtastungs- und Interpolations-Hilfsstufe (221, 222), deren Eingang entsprechend der genannten Selektion der ersten oder zweiten Mode entweder mit dem Ausgang der genannten Bewegungskompensationshilfsstufe, oder unmittelbar mit dem Eingang der genannten Anordnung verbunden ist;

(d) einen Umschalter (130), der an seinem Ausgang oder entsprechend der genannten Mode-Information entsprechend der Selektion der ersten bzw. zweiten Mode entweder das Ausgangssignal der genannten Bewegungskompensationshilfsstufe oder das Ausgangssignal der genannten zweiten Unterabtastungs- und Interpolations-Hilfsstufe liefert;

(e) einen Umschalter (250) zum wechselweisen Selektieren mit einer Frequenz, die zweimal höher ist als die der Eingangssignale, entweder des genannten Ausgangssignals dieses Umschalters (130) oder des Eingangssignals der genannten Bewegungskompensations-Hilfsstufe, aber um eine halbe Periode der Rate der genannten Eingangssignale der Anordnung verzögert.

11. Anordnung nach Anspruch 10, <u>dadurch gekennzeichnet</u>, daß die erste und die zweite Unterabtastungs-und-Interpolations-Hilfsstufen je eine räumliche Unterabtastungsschaltung (211, 212) und eine räumliche Interpolationsschaltung (212, 222) aufweisen, und daß die Bewegungskompensations-Hilfsstufe Bildspeicher (201a, 201b, 202) und einen Addierer (203) aufweist im Hinblick auf eine bewegungskompensierte Interpolation auf Basis des Ausgangsbildes des ersten dieser Speicher, des Eingangsbildes des zweiten dieser Speicher und der Bewegungsinformation zwischen dem genannten Eingangs- und Ausgangsbild, wobei die von jedem der genannten Speicher herbeigeführte Verzögerung der halben Periode der Eingangssignale der Verarbeitungsanordnung entspricht.

12. Anordnung nach einem der Ansprüche 10 und 11, <u>dadurch gekennzeichnet</u>, daß die Selektion am Eingang der Bewegungskompensations-Hilfsstufe und die Selektion an dem Eingang der zweiten Unterabtastungs- und Interpolations-Hilfsstufe mit Hilfe eines ersten bzw. eines zweiten Umschalters (110, 120) erfolgt, die entsprechend der genannten Mode-Information gesteuert werden.

13. Übertragungs- und/oder Speichersystem mit einer Übertragungsstufe und, nach Übertragung und/oder Speicherung der über einen paßbandbeschränkten Informationsträger übertragenen Signale, was eine Reduktionsverarbeitung der Menge zu übertragender und/oder zu speichernder Informationsanteile erfordert, einer Empfangs- und/oder Lesestufe für die übertragenen und/oder gespeicherten Signale, <u>dadurch gekennzeichnet</u>, daß die Empfangs- und/oder Lesestufe eine Anordnung zur Verarbeitung von Signalen nach einem der Ansprüche 9 bis 12 aufweist.

## Claims

1. An arrangement for processing signals which are grouped in periodic clusters, such as images, and intended to be transmitted and/or stored block-wise via a passband-limited information carrier, which implies a reduction in the quantity of information components to be transmitted and/or stored, comprising:

(a) a temporal sub-sampling sub-assembly provided to supply in a first transmission and/or storage mode, denoted compensated mode, a first sequence of signals to be transmitted and/or stored, having a rate which is twice lower than that of the original signal clusters;

(b) a motion estimation sub-assembly (20) for estimating motion between blocks which belong to consecutive periodical clusters, provided to supply block-wise a motion information to be transmitted and/or stored by replacing those blocks which are cancelled by said temporal sub-sampling;

(c) a recovering sub-assembly with motion compensation (91a, 91b, 92, 93);
    said arrangement being characterized in that it also includes:

(d) a fall-back processing sub-assembly provided to add block-wise to said first signal sequence at least a second signal sequence which is in synchronism with the first and is supplied in accordance with a second fall-back mode, substituting the first compensated mode as a function of the result provided by a decision-taking sub-assembly on the basis of a comparison between the original signals and the signals recovered by said recovering sub-assembly with motion compensation based on transmitted and/or stored blocks and on motion information components.

2. An arrangement as claimed in Claim 1, characterized in that the decision-taking sub-assembly includes a change-over switch (80'a) which is controlled by a decision circuit (94, 95, 96, 97, 98, 99, 100, 101, 102, 103) for selecting, in the compensated mode, only the output signals of the temporal sub-sampling sub-assembly (10'a), and in the fall-back mode, also the output signals of the fall-back processing subassembly.

3. An arrangement as claimed in any one of Claims 1 and 2, characterized in that the fall-back processing sub-assembly includes a delay circuit (50) producing a delay equal to the period of the original signals, followed by a temporal sub-sampling circuit (10"a) operating at the same ratio as the ratio of the temporal sub-sampling sub-assembly.

4. An arrangement as claimed in any one of the Claims 1 to 3, characterized in that the fall-back processing sub-assembly also includes a spatial sub-sampling sub-assembly which comprises, in parallel, a first (30'a, 40a) and a second spatial sub-sampling path (30"a, 60a) in the same ratio as that of the temporal sub-sampling, the spatial sub-sampling matrix of each path being independent of the motion and being fixed but for the temporal resolution of the signals.

5. An arrangement as claimed in Claim 4, characterized in that:

(A) the spatial sub-sampling sub-assembly comprises, in each path, a spatial filtering circuit (30'a, 30"a) followed by a spatial sub-sampling circuit (40a, 60a) operating at a ratio 1/2, and, at the output of the two paths, a switching circuit (70a) provided to select alternately one or the other of the outputs of said spatial sub-sampling circuits at a frequency which is twice lower than that of the original signals;
(B) the decision-taking sub-assembly includes a changeover switch (80"a) controlled to select, in the compensated mode, the output signals of the temporal sub-sampling sub-assembly (10'a) or, in the fall-back mode, the output signals of said switching circuit (70a).

6. An arrangement as claimed in Claim 5, for the case in which said signals are signals which are representative of images, characterized in that the selection in the decision-taking circuit is effected per image blocks and after interpolation error and fall-back error computations compared for selecting the smallest error.

7. An arrangement as claimed in Claim 6, characterized in that the passband-limited information carrier is of the compact disc type.

8. A signal transmission and/or storage system comprising a transmission stage and, after transmission and/or storage of the signals transmitted via a passband-limited information carrier which implies a reduction processing of the quantity of information components to be transmitted and/or stored, a receiving and/or read stage for the transmitted and/or stored signals, characterized in that said transmission stage includes an arrangement as claimed in any one of Claims 1 to 7.

9. An arrangement for processing previously transmitted and/or stored signals after a reduction of the quantity of information components to be transmitted and/or stored, effected either in accordance with a first compensated mode and with the aid of a temporal sub-sampling sub-assembly provided to supply a first signal sequence, or in accordance with a second fall-back mode and with the aid of a fall-back processing sub-assembly provided to add to said first sequence a second signal sequence synchronous with the first, the choice of said mode being effected with the transmission of a mode information component with the aid of a decision-taking sub-assembly and on the basis of motion information components which are also transmitted and/or stored, and a comparison of information components which are associated with either one or the other mode, respectively, characterized in that it includes:

(a) a motion compensation sub-assembly (201a, 201b, 202, 203) provided to receive the transmitted and/or stored signals corresponding to the output signals of said temporal sub-sampling sub-assembly;
(b) a change-over switch (130) receiving at a first input the output of the motion-compensation sub-assembly and at a second input the transmitted and/or stored signals corresponding to the output signals of said fall-back processing sub-assembly and supplying from its output, in accordance with said mode information corresponding to the selection of the first or the second mode, either the signals present at said first input or the signals present at said second input, respectively;
(c) a change-over switch (250) for alternately selecting, at a frequency which is twice as high as that of the input signals, either said output of this change-over switch (130), or the input of said motion compensation sub-assembly but delayed by a half period of rate of the said input signals of the signal processing arrangement.

10. An arrangement for processing previously transmitted and/or stored signals after a reduction of the quantity of information components to be transmitted and/or stored, effected either in accordance with a first compensated transmission and/or storage mode and with the aid of a temporal sub-sampling sub-assembly in a predetermined ratio provided to supply a first signal sequence, or in accordance with a second fall-back mode and with the aid of a fall-back processing sub-assembly provided to add a second signal sequence to said first sequence and to effect, after spatial sub-sampling of said sequences, the alternate selection of one or the other of these spatially sub-sampled sequences, the choice of said mode being effected with the transmission of a mode information component with the aid of a decision-taking sub-assembly and on the basis of motion information components which are also transmitted and/or stored, and a comparison of the information components which are associated with either one or the other mode, respectively, with a view to selecting either the output of said motion compensation sub-assembly or the output of said fall-back processing sub-assembly, characterized in that it comprises:

(a) a first sub-sampling and interpolation sub-assembly (211, 212) of the received signals corresponding to the previously transmitted and/or stored signals and constituting the input signals of the arrangement;
(b) a motion-compensation sub-assembly (201a, 201b, 202, 203) whose input is connected, in accordance with said selection of the first or the second mode, respectively, either directly to the input of said arrangement or to this same input but via said first sub-sampling and interpolation sub-assembly;
(c) a second sub-sampling and interpolation sub-assembly (221, 222) whose input is connected, in accordance with said selection of the first or the second mode, respectively, either to the output of said motion compensation sub-assembly, or directly to the input of said arrangement;
(d) a change-over switch (130) which supplies from its output or in accordance with said mode information corresponding to the selection of the first or second mode, respectively, either the output of said motion-compensation sub-assembly or the output of said second sub-sampling and interpolation sub-assembly;
(e) a change-over switch (250) for alternately selecting, at a frequency which is twice as high as the frequency of the input signals, either said output of this change-over switch (130) or the input of said motion compensation sub-assembly but delayed by a half period of the rate of said input signals of the arrangement.

11. An arrangement as claimed in Claim 10, characterized in that the first and second sub-sampling and interpolation sub-assemblies each comprise a spatial sub-sampling circuit (211, 221) and a spatial interpolation circuit (212, 222), and in that the motion compensation sub-assembly comprises image memories (201a, 201b, 202) and an adder (203), with a view to a motion-compensated interpolation on the basis of the output image of the first of these memories, of the input image of the second of these memories, and of the motion information between said input and output images, the delay produced by each of said memories being equal to half the period of the input signals of the processing arrangement.

12. An arrangement as claimed in one of the Claims 10 and 11, characterized in that the selection at the input of the motion compensation sub-assembly and the selection at the input of the second sub-sampling and interpolation sub-assembly are effected with the aid of a first and a second change-over switch (110, 120), respectively, which are controlled in accordance with said mode information.

13. A signal transmission and/or storage system comprising a transmission stage and, after transmission and/or storage of the signals transmitted via a passband-limited information carrier which implies a reduction processing of the quantity of information components to be transmitted and/or stored, a receiving and/or read stage for the transmitted and/or stored signals, characterized in that said receiving and/or read stage includes a signal processing arrangement as claimed in any one of Claims 9 to 12.

FIG.1

FIG.3

FIG. 2

FIG. 4a

FIG. 4b

FIG. 4c

FIG. 5a

FIG. 5b

FIG. 5c

FIG. 6

FIG. 7a

FIG.7b

FIG.7c